# EUROPÄISCHE PATENTSCHRIFT

(11) **EP 3 656 508 B1**
(45) Veröffentlichungstag und Bekanntmachung des Hinweises auf die Patenterteilung: **26.06.2024**
(21) Anmeldenummer: 19200665.8
(22) Anmeldetag: 01.10.2019
(51) Int. Cl.: B25F 5/00

(54) **MOTORISCH DREHEND ANGETRIEBENES HANDWERKZEUG**
MOTOR-ROTATED HAND TOOL
OUTIL PORTATIF ENTRAÎNÉ EN ROTATION PAR LE MOTEUR

(30) Priorität: 12.10.2018 DE 102018125247; 24.09.2019 DE 102019125617
(43) Veröffentlichungstag der Anmeldung: 27.05.2020
(73) Patentinhaber: fischerwerke GmbH & Co. KG, 72178 Waldachtal (DE)
(72) Erfinder: Krumbeck, Markus, 71159 Mötzingen (DE)
(74) Vertreter: Suchy, Ulrich Johannes

(56) Entgegenhaltungen:
- DE-A1-102005 048 162
- DE-A1-102010 003 489
- US-A- 5 484 026

## Beschreibung

Die Erfindung betrifft ein motorisch drehend angetriebenes Handwerkzeug mit den Merkmalen des Oberbegriffs des Anspruchs 1 und ein Verfahren zum automatischen Abschalten des Handwerkzeugs in einem festlegbaren Abstand von einem Werkstück mit den Merkmalen des Oberbegriffs des Anspruchs 9.

Das motorisch drehend angetriebene Handwerkzeug ist insbesondere ein Akkuschrauber oder eine Handbohrmaschine, beispielsweise auch eine Schlagbohrmaschine oder ein Bohrhammer.

Zu einer Bohrtiefeneinstellung sind Handbohrmaschinen mit einem zu einer Drehachse der Handbohrmaschine parallelen, nach vorn über ein Bohrfutter überstehenden, in Längsrichtung verstellbaren und festlegbaren Stab bekannt, der durch Anlage an einer Oberfläche eines Bohrgrundes seitlich neben einem mit der Handbohrmaschine gebohrten Bohrloch die Bohrtiefe begrenzt.

Das europäische Patent EP 2 496 386 B1 offenbart einen Schraubschaft, der von einem Hüllrohr umgeben ist, das drehbar sowie axial verschiebbar und axial federnd auf dem Schraubschaft angeordnet ist. Ein hinteres Ende des Schraubschafts wird in eine Bitaufnahme eines Akkuschraubers eingesetzt und ein vorderes Ende des Schraubschafts weist eine Bitaufnahme auf. Bei einem Eindrehen einer Schraube in einen Ankergrund sitzt das Hüllrohr durch seine Federbeaufschlagung auf dem Ankergrund auf und weist eine Skala an seinem Außenumfang auf, an dem eine Schraubtiefe mit einem Laserstrahl eines Nivellierlasers ablesbar ist.

Das europäische Patent EP 1 945 410 B1 offenbart eine elektrische Handbohrmaschine mit einem Laser zu einer Abstandsmessung von einem Bohrgrund, dessen Laserstrahl parallel neben einer Drehachse der Handbohrmaschine verläuft. Eine Steuereinheit schaltet einen Drehantrieb der Handbohrmaschine bei einem einstellbaren Abstand vom Bohrgrund ab.

Aus dem US-Patent 5,484,026 ist eine weiteres Handwerkzeug bekannt, mit dem eine Mutter bis zum Erreichen einer gewünschten Lage auf eine Gewindestange aufgeschraubt werden kann. Beim Erreichen der gewünschten Lage der Mutter empfängt ein Sensor des Handwerkzeugs ein Signal eines Rotationslasers und das Handwerkzeug schaltet ab, so dass die Mutter in der gewünschten Lage verbleibt.

Aus der Offenlegungsschrift DE 10 2005 048 162 A1 ist ein motorisch drehend angetriebenes Handwerkzeug gemäß dem Oberbegriff des Anspruchs 1 bekannt. Das Handwerkzeug kann verwendet werden, um eine Schraube gemäß dem Oberbegriff des erfindungsgemäßen Verfahrens nach Anspruch 9 in einen Ankergrund einzudrehen und zum Ankergrund auszurichten.

DE102010003489A1 offenbart eine Abstandserfassungsvorrichtung.

Aufgabe der Erfindung ist, ein motorisch drehend angetriebenes Handwerkzeug vorzuschlagen, das seinen Drehantrieb an einer festlegbaren Stelle abschaltet. Weitere Aufgabe der Erfindung ist ein Verfahren zum Abschalten des Handwerkzeugs an einer festlegbaren Stelle.

Diese Aufgabe wird erfindungsgemäß durch die Merkmale der Ansprüche 1 und 9 gelöst.

Das erfindungsgemäße Handwerkzeug weist einen Lichtsensor und eine insbesondere elektronische Steuereinheit auf. Das Handwerkzeug ist insbesondere zu einem Zusammenwirken mit einem Nivellierlaser vorgesehen. Ein Nivellierlaser erzeugt einen Laserstrahl, der in einer hier als Nivellierebene bezeichneten Ebene rotiert, hin und her schwenkt oder sich in anderer Weise in der Nivellierebene bewegt oder diese erzeugt. Der Lichtsensor des erfindungsgemäßen Handwerkzeugs ist insbesondere zur Detektion eines Laserstrahls vorgesehen, möglich ist allerdings auch ein Zusammenwirken mit anderem Licht. Der Lichtsensor detektiert seitlich zu einer Drehachse des Handwerkzeugs einfallendes Licht, insbesondere einen seitlich einfallenden Laserstrahl, und wirkt derart mit der Steuereinheit des Handwerkzeugs zusammen, dass die Steuereinheit einen Drehantrieb, insbesondere einen Elektromotor des Handwerkzeugs abschaltet, wenn Licht seitlich auf den Lichtsensor trifft. "Seitlich" bedeutet radial oder schräg zur Drehachse des Handwerkzeugs, also nicht parallel zur Drehachse. Eine Detektion schräg einfallenden Lichts ist sinnvoll beziehungsweise notwendig, wenn die Drehachse bei einem Einsatz des Handwerkzeugs schräg zu einem Lichtstrahl, Laserstrahl beziehungsweise der Nivellierebene des Nivellierlasers verläuft. Mit Hilfe insbesondere eines Nivellierlasers ist es möglich, dass sich der Drehantrieb des erfindungsgemäßen Handwerkzeugs immer in einer festgelegten Ebene, nämlich dann, wenn der Lichtsensor des Handwerkzeugs in die Nivellierebene des Nivellierlasers gelangt, von selbst abschaltet. Dadurch ist es möglich, dass sich Lochgründe von Bohrlöchern, die mit dem Handwerkzeug in ein Werkstück gebohrt werden, oder Schraubenköpfe von Schrauben, die mit dem Handwerkzeug in ein Werkstück gedreht werden, in einer Ebene befinden, und zwar selbst dann, wenn eine Oberfläche des Werkstücks nicht eben ist und/oder schräg zur Nivellierebene verläuft. Das Werkstück kann beispielsweise ein Balken einer Decke oder eine Wand aus Mauerwerk oder Beton sein, wobei diese Aufzählung beispielhaft und nicht abschließend ist.

Eine Weiterbildung der Erfindung sieht eine Anpassung des Lichtsensors und/oder der Steuereinheit des Handwerkzeugs an das zum Abschalten seines Drehantriebs verwendete Licht vor. Bei dieser Ausgestaltung der Erfindung schaltet die Steuereinheit den Drehantrieb des Handwerkzeugs ab, wenn Licht, insbesondere ein Laserstrahl, mit einer oder mehreren festgelegten physikalischen Eigenschaften seitlich auf den Lichtsensor trifft. Solche Eigenschaften können beispielsweise Farbe, das heißt Frequenz, Intensität, Polarität und/oder Kohärenz des Lichts sein. Diese Ausgestaltung der Erfindung vermeidet ein Abschalten des Drehantriebs des Handwerkzeugs durch anderes als das zum Abschalten vorgesehene Licht. Dabei genügt es normalerweise, nur eine ausgewählte physikalische Eigenschaft des Lichts zum Abschalten des Drehantriebs des Handwerkzeugs zu nutzen, um ein unbeabsichtigtes Abschalten des Drehantriebs des Handwerkzeugs durch anderes als das zum Abschalten vorgesehene Licht zu vermeiden. Die Berücksichtigung von mehr als einer physikalischen Eigenschaft des Lichts zum Abschalten des Drehantriebs des erfindungsgemäßen Handwerkzeugs erhöht die Sicherheit gegen unbeabsichtigtes Abschalten durch anderes als das zum Abschalten vorgesehene Licht.

Eine bevorzugte Ausgestaltung des erfindungsgemäßen Handwerkzeugs weist ein Schraubwerkzeug mit einem Schraubschaft auf, der von einem Hüllrohr umgeben ist, beispielsweise ein Schraubwerkzeug, wie es prinzipiell aus dem Patent EP 2 496 386 B1 bekannt ist. Vorzugsweise ist in diesem Fall der Lichtsensor am Schraubwerkzeug und insbesondere am Hüllrohr angeordnet und an diesem in Richtung der Drehachse verschieb- und axial festlegbar, so dass ein gewünschter Abstand zwischen Lichtsensor und einem vorderen Ende des Hüllrohrs, das am Werkstück zur Anlage kommt, eingestellt werden kann. Durch die Verwendung des Hüllrohrs, das beim Einschrauben einer Schraube in ein Werkstück am Werkstück anliegt, ist der Abstand des Lichtsensors vom Werkstück unabhängig von der Tiefe, in die die Schraube in das Werkstück versenkt wird.

Eine Weiterbildung der Erfindung sieht vor, dass die Steuereinheit des erfindungsgemäßen Handwerkzeugs den Drehantrieb des erfindungsgemäßen Handwerkzeugs drehrichtungsabhängig abschaltet. Das ermöglicht zum Beispiel eine Schraube mit einem Senkkopf, insbesondere eine Justierschraube, durch ein Werkstück in einen Ankergrund einzudrehen, bis der Schraubenkopf im Werkstück versenkt ist. Bei dieser Drehrichtung schaltet die Steuereinheit des erfindungsgemäßen Handwerkzeugs den Drehantrieb nicht ab, wenn der Lichtsensor Licht detektiert. Durch Umkehr der Drehrichtung des Drehantriebs wird die Schraube aus einem Ankergrund herausgedreht, bis der Lichtsensor einen Lichtstrahl detektiert und die Steuereinheit den Drehantrieb abschaltet. Beim Herausdrehen aus dem Ankergrund bewegt die Schraube das Werkstück in einen Abstand vom Ankergrund. Das Niveau des Werkstücks wird durch den Lichtstrahl beziehungsweise Laserstrahl festgelegt.

Möglich ist, dass sich der Lichtsensor an einem Gehäuse des Handwerkzeugs befindet. Bei einer bevorzugten Ausgestaltung der Erfindung befindet sich der Lichtsensor vor einer Werkzeugaufnahme des Handwerkzeugs. "Vor" meint hier, auf einer dem Gehäuse abgewandten und bei Gebrauch dem Werkstück zugewandten Seite der Werkzeugaufnahme, also auf der Seite der Werkzeugaufnahme, auf der ein Werkzeug aus der Werkzeugaufnahme vorsteht. Die Werkzeugaufnahme ist insbesondere ein Backenfutter oder eine Bitaufnahme, sie dient einer wechselbaren Befestigung eines mit dem Handwerkzeug drehend antreibbaren Werkzeugs, beispielsweise eines Bohrers oder eines Schrauberbits am Handwerkzeug.

Eine Ausgestaltung der Erfindung sieht vor, dass der Lichtsensor in Richtung der Drehachse des Handwerkzeugs verstellbar ist, also entlang der Drehachse bewegt und in einer gewünschten Position festgelegt werden kann. Der Lichtsensor kann parallel oder schräg zur Drehachse verstellbar sein.

Vorzugsweise weist das erfindungsgemäße Handwerkzeugs mehrere um seine Drehachse herum angeordnete Lichtsensoren auf oder der Lichtsensor kreist um die Drehachse, damit der oder die Lichtsensoren aus verschiedenen Richtungen, insbesondere aus beliebiger Richtung seitlich zur Drehachse einfallendes Licht detektiert. Dadurch muss das Handwerkzeug nicht zu einer Lichtquelle ausgerichtet werden.

Insbesondere ist das erfindungsgemäße Handwerkzeug ein Akkuschrauber oder eine Handbohrmaschine, auch eine Schlagbohrmaschine oder einem Bohrhammer.

Die Ansprüche 10 bis 12 sehen eine Verwendung des erfindungsgemäßen Handwerkzeugs zusammen mit einem Nivellierlaser vor. Das erfindungsgemäße Handwerkzeug und der Nivellierlaser bilden gemeinsam ein Werkzeugsystem. Der Lichtsensor und/oder die Steuereinheit des Handwerkzeugs können auf eine oder mehrere physikalische Eigenschaften eines Laserstrahls des Nivellierlasers abgestimmt oder abstimmbar sein. Der Nivellierlaser wird so in Bezug zu einem Werkstück angeordnet, dass sich sein Laserstrahl in einer Nivellierebene im Bezug zum Werkstück bewegt. Grundsätzlich kann die Nivellierebene eine beliebige Lage in Bezug zu der Oberfläche des Werkstücks aufweisen, beispielsweise kann die Nivellierebene schräg in einem Winkel zu der Oberfläche des Werkstücks ausgerichtet sein. Vorzugsweise ist die Nivellierebene mit Abstand zum Werkstück ausgerichtet. Die Nivellierebene befindet sich beispielsweise bei einer senkrechten Wand seitlich neben der Wand, bei einer Decke unter der Decke. Bei einer unebenen Oberfläche des Werkstücks kann die Nivellierebene zu den höchsten oder tiefsten Stellen der der Nivellierebene zugewandten Oberfläche des Werkstücks oder parallel zu einer Mittelebene zwischen den höchsten und den tiefsten Stellen der Oberfläche des Werkstücks ausgerichtet werden beziehungsweise sein. Das gilt entsprechend auch, wenn das Werkstück keine durchgehende Oberfläche aufweist sondern nur stellenweise vorhanden ist, wie beispielsweise bei Dachbalken oder einer Unterkonstruktion mit Latten.

Das Handwerkzeug wird mit eingeschaltetem Drehantrieb axial zu seiner Drehachse relativ zu der Oberfläche des Werkstücks bewegt, bis der Laserstrahl des Nivellierlasers auf den Lichtsensor des Handwerkzeugs trifft und die Steuereinheit des Handwerkzeugs den Drehantrieb abschaltet. Es ist auch möglich, dass die Steuereinheit den Drehantrieb nicht abschaltet, wenn sich das Handwerkzeug der Oberfläche des Werkstücks nähert, sondern erst, wenn sich das Handwerkzeug der Oberfläche des Werkstücks so weit genähert hat, dass der Lichtsensor durch die Nivellierebene hindurchdurch getreten ist und das Handwerkzeug - vorzugsweise nach beziehungsweise durch Umkehrung einer Drehrichtung seines Drehantriebs - wieder von der Oberfläche des Werkstücks entfernt wird.

Die vorstehend in der Beschreibung genannten Merkmale und Merkmalskombinationen, Ausführungen und Ausgestaltungen der Erfindung sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des oder der Ausführungsbeispiele, sondern einen grundsätzlich beliebigen Teil der gekennzeichneten Merkmale eines Ausführungsbeispiels gegebenenfalls in Kombination mit einem, mehreren oder allen Merkmalen eines oder mehrerer weiterer Ausführungsbeispiele aufweisen, sind möglich.

Die Erfindung wird nachfolgend anhand von in der Zeichnung dargestellten Ausführungsbeispielen näher erläutert. Es zeigen:
- Figuren 1 bis 3: eine schematisierte Darstellung eines erfindungsgemäßen Handwerkzeugs und dessen Verwendung in drei aufeinander folgenden Verfahrensschritten als erstes Ausführungsbeispiel;
- Figur 4: eine Variante des ersten Ausführungsbeispiels; und
- Figur 5: ein drittes Ausführungsbeispiel eines erfindungsgemäßen Handwerkzeugs und dessen Verwendung.

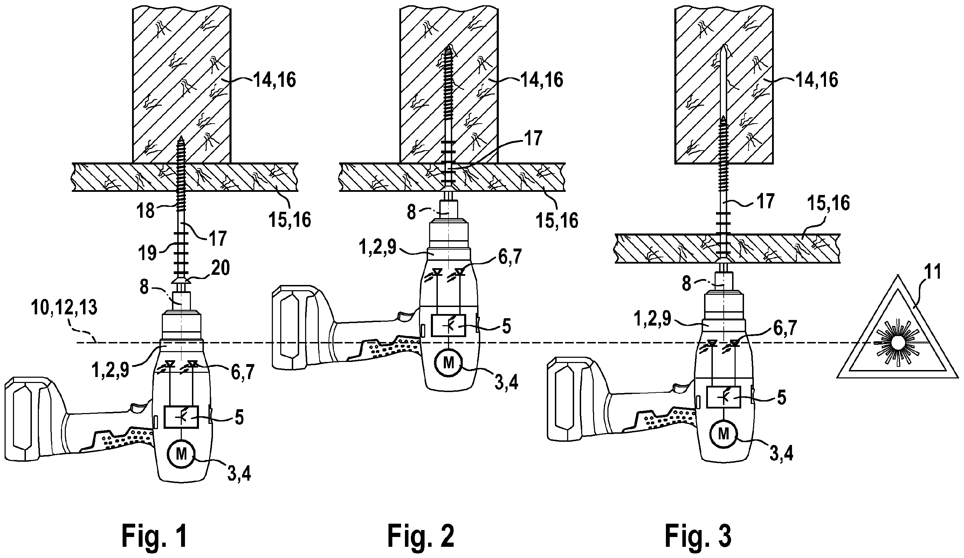

Die Figuren 1 bis 3 zeigen einen Akkuschrauber 1 als Beispiel eines erfindungsgemäßen, motorisch drehend angetriebenen Handwerkzeugs 2. Der Akkuschrauber 1 weist einen Elektromotor 3 als Drehantrieb 4 des Handwerkzeugs 2 und eine elektronische Steuereinheit 5 auf. Der Elektromotor 3 und die Steuereinheit 5 sind ebenso wie noch zu erläuternde Fotodioden 6 als Schaltzeichen dargestellt.

Es sind mehrere Fotodioden 6 als Lichtsensoren 7 um eine Drehachse 8 des das Handwerkzeug 2 bildenden Akkuschraubers 1 herum in einem Gehäuse 9 des Akkuschraubers 1 angeordnet. Die Fotodioden 6 sind versenkt und nach außen offen in dem Gehäuse 9 des Akkuschraubers 1 angeordnet, so dass ein von außen kommender Lichtstrahl detektiert werden kann. Es sind so viele Fotodioden 6 in einer Radialebene zu der Drehachse 8 auf einem Umfang des Gehäuses 9 des Akkuschraubers 1 verteilt angeordnet, dass ein Lichtstrahl, egal aus welcher Umfangsrichtung er kommt, von mindestens einer Fotodiode 6 detektiert wird. Die Fotodioden 6 können in Umfangsrichtung gleiche oder unterschiedliche Abstände voneinander aufweisen. Die Fotodioden 6 sind versenkt so in dem Gehäuse 9 des Akkuschraubers 1 angeordnet, dass sie einen radial oder schräg in einem Winkel zur Drehachse 8 des das erfindungsgemäße Handwerkzeug 2 bildenden Akkuschraubers 1 auf die Fotodioden 6 treffenden Lichtstrahl detektieren.

Die Steuereinheit 5 wirkt mit den die Lichtsensoren 7 bildenden Fotodioden 6 zusammen, sie erhält Signale der Fotodioden 6. Außerdem regelt oder steuert die Steuereinheit 5 den Elektromotor 3, der den Drehantrieb 4 des Akkuschraubers 1 bildet. Die Steuereinheit 5 schaltet den Elektromotor 3 ab, wenn ein Lichtstrahl 10 auf eine oder mehrere der Fotodioden 6 fällt.

Der das erfindungsgemäße Handwerkzeug 2 bildende Akkuschrauber 1 ist zu einer Benutzung zusammen mit einem Nivellierlaser 11 vorgesehen, der in der Zeichnung als Schaltzeichen dargestellt ist und mit dem das Handwerkzeug 2 ein Werkzeugsystem bildet. Der Nivellierlaser 11 sendet einen in einer Ebene rotierenden Laserstrahl 12 aus, der eine Nivellierebene 13 erzeugt. Die Steuereinheit 5 ist so auf den Nivellierlaser 11 abgestimmt, dass sie den Elektromotor 3 abschaltet, wenn der Laserstrahl 12 des Nivellierlasers 11 auf eine oder mehrere der Fotodioden 6 fällt. Fällt anderes Licht auf eine der Fotodioden 6, schaltet die Steuereinheit 5 den Drehantrieb 4 nicht ab. Im Ausführungsbeispiel schaltet die Steuereinheit 5 den Elektromotor 3 aus, wenn Licht mit hoher Intensität, wie sie der Laserstrahl 12 aufweist, anderes Licht jedoch üblicherweise nicht aufweist, auf eine oder mehrere der Fotodioden 6 des Akkuschraubers 1 fällt. Die Steuereinheit 5 kann zusätzlich oder stattdessen auf die Farbe beziehungsweise Frequenz und/oder Kohärenz des Laserstrahls 12 des Nivellierlaser 11 abgestimmt sein. Eine weitere Möglichkeit ist, den Laserstrahl 12 zu polarisieren und Polarisationsfilter für die die Lichtsensoren 7 bildenden Fotodioden 6 vorzusehen. Durch eine oder mehrere dieser Maßnahmen lässt sich weitgehend sicherstellen, dass die Steuereinheit 5 den Elektromotor 3 abschaltet, wenn der Laserstrahl 12 des Nivellierlasers 11 auf eine oder mehrere der Fotodioden 6 trifft, nicht jedoch wenn anderes Licht auf eine oder mehrere der Fotodioden 6 trifft.

Es ist möglich, dass die Steuereinheit 5 den Elektromotor 3 in beiden Drehrichtungen abschaltet, allerdings ist es auch möglich, den Elektromotor 3 drehrichtungsabhängig abzuschalten, wobei die Drehrichtung, bei der die Steuereinheit 5 den Elektromotor 3 abschaltet, wählbar ist.

Die Figuren 1 bis 3 zeigen Balken 14 als Träger einer im Übrigen nicht dargestellten Decke, an denen in einem Abstand eine Verschalung 15 aus Brettern angebracht werden soll. Die Verschalung 15 soll in einer bestimmten Ebene angeordnet werden, unabhängig davon, ob die Balken 14 der Decke alle den gleichen Abstand von dieser Ebene aufweisen oder nicht. Im Regelfall werden aufgrund von Toleranzen verschiedene Balken 14 unterschiedliche Abstände aufweisen. Die Balken 14 und die Verschalung 15 bilden Werkstücke 16 beziehungsweise ein Werkstück 16. Um die Verschalung 15 in der gewünschten Ebene auszurichten und am Balken 14 zu befestigen, werden Spezial-Holzschrauben 17, sogenannte Justierschrauben, mit dem das erfindungsgemäße Handwerkzeug 2 bildenden Akkuschrauber 1 durch die Verschalung 15 in die Balken 14 gedreht. Die Spezial-Holzschrauben 17 weisen ein Holzschraubengewinde 18 und ohne Steigung umlaufende Rippen 19 unter einem Schraubenkopf 20 auf. Beim Eindrehen der Spezial-Holzschrauben 17 durch die Verschalung 15 in die Balken 14 ziehen die Spezial-Holzschrauben 17 ihre umlaufenden Rippen 19 in die Bretter der Verschalung 15 ein. Die umlaufenden Rippen 19 dringen in die Bretter der Verschalung 15 ein und halten sie mit ausreichender Kraft axial auf den Spezial-Holzschrauben 17, um den Abstand von den Balken 14 einstellen zu können. Die Spezial-Holzschrauben 17 sind in der Verschalung 15 drehbar.

Die Spezial-Holzschrauben 17 werden so tief in die Balken 14 gedreht, bis die Schraubenköpfe 20, die im Ausführungsbeispiel Senkköpfe sind, bündig oder etwas versenkt in die Verschalung 15 eingezogen sind. Damit die Schrauben nicht zu tief in die Verschalung 15 eingezogen werden, kann am Handwerkzeug 2 eine zusätzliche Abschalteinrichtung (nicht dargestellt) vorgesehen sein, die das Eindrehen dann beendet, wenn der Schraubenkopf bündig mit der Verschalung 15 ist. Beispielsweise kann hierzu ein Abstandssensor verwendet werden, wie er aus dem Stand der Technik bekannt ist, der den Abstand zwischen Verschalung 15 und Handwerkzeug 2 misst und das Einschrauben beendet, wenn das Handwerkzeug einen Abstand zur Verschalung erreicht hat, in dem der Schraubenkopf 20 bündig in die Verschalung versenkt ist. Dieser zusätzliche Abstandssensor kann mit der Steuereinheit 5 gekoppelt oder unabhängig von dieser sein. Der Abstandssensor kann beim Erreichen des gewünschten Abstands auch ein Umschalten der Drehrichtung bewirken, so dass nach dem Eindrehen der Spezial-Holzschrauben 17 die Rückbewegung zur Justage (s.u.) automatisch erfolgt. In Figur 2 ist der Zustand dargestellt, in dem der Schraubenkopf 20 bündig in die Verschalung 15 versenkt ist. Ist dieser Zustand erreicht, wird eine Drehrichtung des den Drehantrieb 4 bildenden Elektromotors 3 des Akkuschraubers 1 umgekehrt und die Spezial-Holzschrauben 17 werden zur Justage so weit aus den Balken 14 herausgedreht, bis die Verschalung 15 den gewünschten Abstand von den Balken 14 aufweist. Diesen Zustand zeigt Figur 3. Die Umkehr der Drehrichtung kann manuell oder automatisch anhand eines Drehmoments umgekehrt werden, das beim Einziehen der Schraubenköpfe 20 in die Bretter der Verschalung 15 ansteigt.

Erfindungsgemäß wird der Nivellierlaser 11 so in Bezug zu den das Werkstück 16 bildenden Balken 14 der im Übrigen nicht dargestellten Decke angeordnet, dass sich die Nivellierebene 13, in der der Laserstrahl 12 rotiert, in einer zu den Balken 14 parallelen oder auch schrägen Ebene unter den Balken 14 befindet. Der Nivellierlaser 11 kann an einem der Balken 14, an einer nicht dargestellten, an die Decke angrenzenden Wand, mit einem Stativ auf einem Boden oder in sonstiger Weise angeordnet werden.

Die Steuereinheit 5 des Akkuschraubers 1 ist so eingestellt, dass der auf die Lichtsensoren 7 auftreffende Laserstrahl 12 den Elektromotor 3 nicht beim Eindrehen der Spezial-Holzschrauben 17 in die Balken 14, sondern nur bei der umgekehrten Drehrichtung zum Herausdrehen der Spezial-Holzschrauben 17 aus den Balken 14 abschaltet. Dadurch treten die die Lichtsensoren 7 bildenden Fotodioden 6 des Akkuschraubers 1 beim Eindrehen der Spezial-Holzschrauben 17 in die Balken 14 durch die Nivellierebene 13 hindurch, ohne dass die Steuereinheit 5 den Drehantrieb 4 abschaltet. Erst beim Herausdrehen der Spezial-Holzschrauben 17 aus den Balken 14 schaltet die Steuereinheit 5 den Elektromotor 3 ab, wenn die Fotodioden 6 des Akkuschraubers 1 in die Nivellierebene 13 gelangen. Dadurch werden die Spezial-Holzschrauben 17 so weit aus den Balken 14 herausgedreht, dass sich ihre Schraubenköpfe 20 in einer zur Nivellierebene 13 parallelen Ebene befinden, und zwar auch dann, wenn sich verschiedene Balken 14 nicht in einer Ebene befinden und unterschiedliche Abstände zur Nivellierebene 13 aufweisen. Durch die Rückbewegung zur Justage werden die Bretter der Verschalung 15 in eine Ebene gebracht.

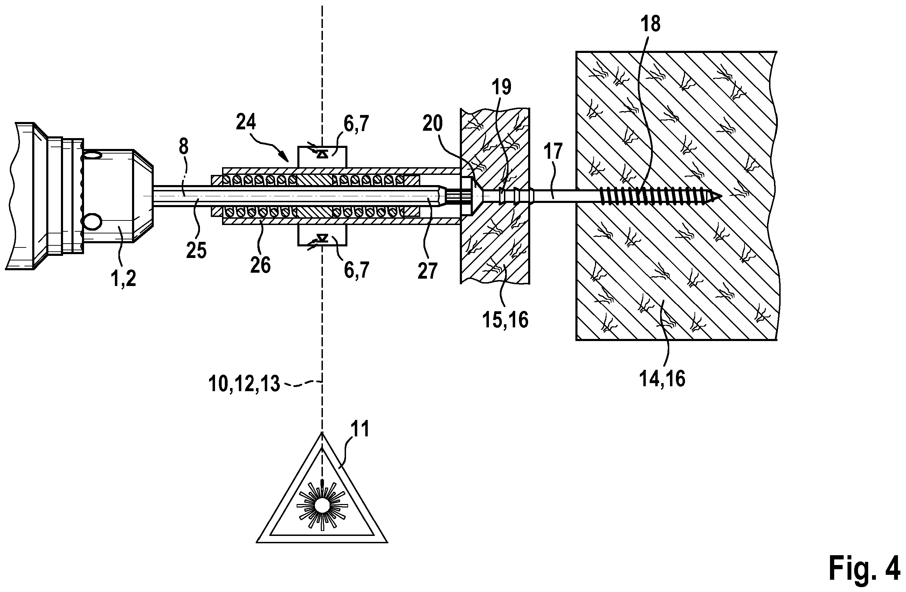

In Figur 4 ist eine Variante des Handwerkzeugs 2 dargestellt, das ein Schraubwerkzeug 24 aufweist. Das Schraubwerkzeug umfasst einen Schraubschaft 25, dessen hinteres Ende mit dem Akkuschrauber 1 drehfest verbunden ist und der am vorderen Ende einen Bit 27 aufweist, mit dem er in die Werkzeugaufnahme der Spezial-Holzschraube 17 zum Drehen der Spezial-Holzschraube 17 um die Drehachse 8 eingreift. Der Schraubschaft 25 ist von einem Hüllrohr 26 umgeben und zu diesem axial verstellbar, so wie dies aus dem Stand der Technik bekannt ist. An dem Hüllrohr 26 ist der Lichtsensor 7 angeordnet. Das Hüllrohr 26 liegt an der Verschalung 15 an, so dass der Abstand zwischen Lichtsensor 7 und der Verschalung 15 unabhängig davon ist, wie weit der Schraubenkopf 20 beim Einschrauben in die Verschalung 15 eindringt. Der Lichtsensor 7 ist am Hüllrohr axial, also in Richtung der Drehachse 8, einstell- und festlegbar, so dass er den gewünschten Abstand von der Verschalung 15 aufweist, der dem gewünschten Abstand zwischen Verschalung 15 und Nivellierebene 13 entspricht.

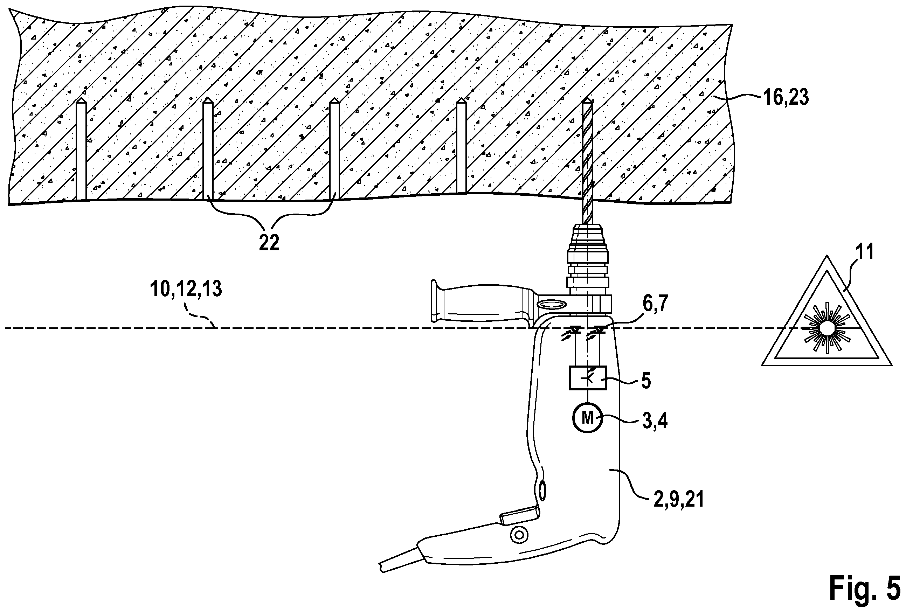

Figur 5 zeigt eine Handbohrmaschine 21 als weiteres Ausführungsbeispiel eines erfindungsgemäßen, motorisch drehend angetriebenen Handwerkzeugs 2, mit der Löcher 22 in eine Decke 23 aus beispielsweise Beton gebohrt werden. Die Decke 23 bildet ein Werkstück 16. Die Handbohrmaschine 21 weist wie der Akkuschrauber 1 aus Figuren 1 bis 3 einen Elektromotor 3 als Drehantrieb 4, eine elektronische Steuereinheit 5 und über den Umfang verteilt angeordnete Fotodioden 6 als Lichtsensoren 7 auf. Die Steuereinheit 5 schaltet den Elektromotor 3 ab, wenn ein Laserstrahl 12 eines Nivellierlaser 11 auf eine oder mehrere der Fotodioden 6 fällt. Der Nivellierlaser 11 ist so angeordnet, dass sich eine Nivellierebene 13 unter der Decke 23 befindet. Die Steuereinheit 5 schaltet den Elektromotor 3 der Handbohrmaschine 21 beim Bohren der Löcher 22 ab, wenn die Fotodioden 6 in die Nivellierebene 13 gelangen. Dadurch befinden sich Lochgründe der Löcher 22 in einer zu der Nivellierebene 13 parallelen Ebene, auch wenn eine Oberfläche der Decke 23 uneben und/oder die Nivellierebene 13 schräg zur Decke 23 ist.

### Bezugszeichenliste

### Motorisch drehend angetriebenes Handwerkzeug

- 1: Akkuschrauber
- 2: Handwerkzeug
- 3: Elektromotor
- 4: Drehantrieb
- 5: Steuereinheit
- 6: Fotodioden
- 7: Lichtsensor
- 8: Drehachse
- 9: Gehäuse
- 10: Lichtstrahl
- 11: Nivellierlaser
- 12: Laserstrahl
- 13: Nivellierebene
- 14: Balken
- 15: Verschalung
- 16: Werkstück
- 17: Spezial-Holzschraube
- 18: Holzschraubengewinde
- 19: Rippe
- 20: Schraubenkopf
- 21: Handbohrmaschine
- 22: Loch
- 23: Decke
- 24: Schraubwerkzeug
- 25: Schraubschaft
- 26: Hüllrohr
- 27: Bit

## Patentansprüche

1. Motorisch drehend angetriebenes Handwerkzeug (2) mit einem Lichtsensor (7) und mit einer Steuereinheit (5), wobei der Lichtsensor (7) radial oder schräg zu einer Drehachse (8) des Handwerkzeugs (2) einfallendes Licht (10), insbesondere einen Laserstrahl (12), detektiert und derart mit der Steuereinheit (5) zusammenwirkt, dass die Steuereinheit (5) einen Drehantrieb (4) des Handwerkzeugs (2) abschaltet, wenn Licht (10) radial oder schräg zur Drehachse (8) des Handwerkzeugs (2) auf den Lichtsensor (7) trifft, **dadurch gekennzeichnet, dass** die Steuereinheit (5) den Drehantrieb (4) drehrichtungsabhängig abschaltet..

2. Motorisch drehend angetriebenes Handwerkzeug nach Anspruch 1, **dadurch gekennzeichnet, dass** die Steuereinheit (5) den Drehantrieb (4) des Handwerkzeugs (2) abschaltet, wenn Licht (10) mit einer oder mehreren festgelegten Eigenschaften, insbesondere ein Laserstrahl (12), radial oder schräg zur Drehachse (8) des Handwerkzeugs (2) auf den Lichtsensor (7) trifft.

3. Motorisch drehend angetriebenes Handwerkzeug nach einem oder mehreren der Ansprüche 1 bis 2, **dadurch gekennzeichnet, dass** sich der Lichtsensor (7) vor einer Werkzeugaufnahme des Handwerkzeugs (2) befindet.

4. Motorisch drehend angetriebenes Handwerkzeug nach einem oder mehreren der vorhergehenden Ansprüche, **dadurch gekennzeichnet, dass** das Handwerkzeug ein Schraubwerkzeug (24) mit einem Schraubschaft (25) aufweist, der von einem Hüllrohr (26) umgeben ist.

5. Motorisch drehend angetriebenes Handwerkzeug nach Anspruch 4, **dadurch gekennzeichnet, dass** der Lichtsensor (27) am Schraubwerkzeug (24) angeordnet ist, insbesondere am Hüllrohr (26).

6. Motorisch drehend angetriebenes Handwerkzeug nach einem oder mehreren der vorhergehenden Ansprüche, **dadurch gekennzeichnet, dass** der Lichtsensor (7) in Richtung der Drehachse (8) des Handwerkzeugs (2) verstellbar ist.

7. Motorisch drehend angetriebenes Handwerkzeug nach einem oder mehreren der vorhergehenden Ansprüche, **dadurch gekennzeichnet, dass** das Handwerkzeug (2) mehrere um die Drehachse (8) herum angeordnete Lichtsensoren (7) und/oder einen um die Drehachse (8) kreisenden Lichtsensor (7) aufweist.

8. Motorisch drehend angetriebenes Handwerkzeug nach einem oder mehreren der vorhergehenden Ansprüche, **dadurch gekennzeichnet, dass** das Handwerkzeug (2) ein Akkuschrauber (1) oder eine Handbohrmaschine (21) ist.

9. Verfahren zum Beenden des Drehantriebs eines motorisch drehend angetriebenen Handwerkzeugs (2) nach einem oder mehreren der Ansprüche 1 bis 8, wobei ein Nivellierlaser (11) so in Bezug zu einem Werkstück (16) angeordnet ist, dass sich ein Laserstrahl (12) des Nivellierlasers (10) in einer Nivellierebene (13) bewegt und dass die Steuereinheit (5) des Handwerkzeugs (2) den Drehantrieb (4) abschaltet, wenn der Laserstrahl (12) des Nivellierlasers (11) auf den Lichtsensor (7) des Handwerkzeugs (2) trifft, **dadurch gekennzeichnet, dass** der Lichtsensor (7) des Handwerkzeugs (2) die Nivellierebene (13), in der sich der Laserstrahl (12) des Nivellierlasers (11) bewegt, überwindet, ohne dass die Steuereinheit (5) des Handwerkzeugs (2) den Drehantrieb des Handwerkzeugs (2) abschaltet, dass, nachdem der Lichtsensor (7) des Handwerkzeugs (2) die Nivellierebene (13) überwunden hat, die Drehrichtung des Drehantriebs des Handwerkzeugs (2) umgekehrt und das Handwerkzeug (2) axial zu seiner Drehachse (8) von dem Werkstück (16) weg bewegt wird, und dass die Steuereinheit (5) des Handwerkzeugs (2) den Drehantrieb (4) dabei abschaltet, wenn der Laserstrahl (12) des Nivellierlasers (11) auf den Lichtsensor (7) des Handwerkzeugs (2) trifft.

10. Verfahren nach Anspruch 10, **dadurch gekennzeichnet, dass** ein Nivellierlaser (11) so in Bezug zu einem Werkstück (16) angeordnet wird, dass sich der Laserstrahl (12) des Nivellierlasers (11) in der Nivellierebene (13) bewegt und dass das Handwerkzeug (2) mit eingeschaltetem Drehantrieb (4) axial zu seiner Drehachse (8) relativ zu der Oberfläche des Werkstücks (16) bewegt wird, bis der Laserstrahl (12) des Nivellierlasers (11) auf den Lichtsensor (7) des Handwerkzeugs (2) trifft und die Steuereinheit (5) des Handwerkzeugs (2) den Drehantrieb (4) abschaltet.

## Claims

1. A handheld tool (2) driven by a motor so as to rotate and having a light sensor (7) and a control unit (5), wherein the light sensor (7) detects light (10), in particular a laser beam (12), incident radially or transversely to an axis of rotation (8) of the handheld tool (2) and interacts with the control unit (5) in such a way that the control unit (5) switches off a rotary drive (4) of the handheld tool (2) when light (10) impinges the light sensor (7) radially or transversely to the axis of rotation (8) of the handheld tool (2), **characterized in that** the control unit (5) switches off the rotary drive (4) depending on the direction of rotation.

2. The handheld tool driven by a motor so as to rotate according to claim 1, **characterized in that** the control unit (5) switches off the rotary drive (4) of the handheld tool (2) when light (10) having one or more defined properties, in particular a laser beam (12), impinges the light sensor (7) radially or transversely to the axis of rotation (8) of the handheld tool (2).

3. The handheld tool driven by a motor so as to rotate according to one or more of claims 1 to 2, **characterized in that** the light sensor (7) is located in front of a tool holder of the handheld tool (2).

4. The handheld tool driven by a motor so as to rotate according to one or more of the preceding claims, **characterized in that** the handheld tool has a screwing tool (24) with a screw shaft (25) surrounded by a sheath tube (26).

5. The handheld tool driven by a motor so as to rotate according to claim 4, **characterized in that** the light sensor (27) is arranged on the screwing tool (24), in particular on the sheath tube (26).

6. The handheld tool driven by a motor so as to rotate according to one or more of the preceding claims, **characterized in that** the light sensor (7) is adjustable in the direction of the axis of rotation (8) of the handheld tool (2).

7. The handheld tool driven by a motor so as to rotate according to one or more of the preceding claims, **characterized in that** the handheld tool (2) has several light sensors (7) arranged around the axis of rotation (8) and/or a light sensor (7) circling around the axis of rotation (8).

8. The handheld tool driven by a motor so as to rotate according to one or more of the preceding claims, **characterized in that** the handheld tool (2) is a cordless screwdriver (1) or a hand drill (21).

9. A method for terminating the rotary drive of a handheld tool (2) driven by a motor so as to rotate according to one or more of claims 1 to 8, wherein a leveling laser (11) is arranged in relation to a workpiece (16) such that a laser beam (12) of the leveling laser (10) moves in a leveling plane (13) and in that the control unit (5) of the handheld tool (2) switches off the rotary drive (4) when the laser beam (12) of the leveling laser (11) impinges the light sensor (7) of the handheld tool (2), **characterized in that** the light sensor (7) of the handheld tool (2) overcomes the leveling plane (13) in which the laser beam (12) of the leveling laser (11) moves without the control unit (5) of the handheld tool (2) switching off the rotary drive of the handheld tool (2), **in that** after the light sensor (7) of the handheld tool (2) has overcome the leveling plane (13), the direction of rotation of the rotary drive of the handheld tool (2) is reversed and the handheld tool (2) is moved away from the workpiece (16) axially to its axis of rotation (8), **and in that** the control unit (5) of the handheld tool (2) switches off the rotary drive (4) when the laser beam (12) of the leveling laser (11) impinges the light sensor (7) of the handheld tool (2).

10. The method according to claim 10, **characterized in that** a leveling laser (11) is arranged relative to a workpiece (16) such that the laser beam (12) of the leveling laser (11) moves in the leveling plane (13) and **in that** the handheld tool (2) with the rotary drive (4) switched on is moved axially to its axis of rotation (8) relative to the surface of the workpiece (16) until the laser beam (12) of the leveling laser (11) impinges the light sensor (7) of the handheld tool (2) and the control unit (5) of the handheld tool (2) switches off the rotary drive (4).

## Revendications

1. Outil à main (2) entraîné en rotation par un moteur, comportant un capteur de lumière (7) et une unité de commande (5), le capteur de lumière (7) détectant une lumière (10), en particulier un faisceau laser (12), incidente radialement ou obliquement par rapport à un axe de rotation (8) de l'outil à main (2), et coopérant avec l'unité de commande (5) de sorte que l'unité de commande (5) désactive un entraînement rotatif (4) de l'outil à main (2) lorsque la lumière (10) atteint le capteur de lumière (7) radialement ou obliquement par rapport à l'axe de rotation (8) de l'outil à main (2), **caractérisé en ce que** l'unité de commande (5) désactive l'entraînement rotatif (4) en fonction du sens de rotation.

2. Outil à main entraîné en rotation par un moteur selon la revendication 1, **caractérisé en ce que** l'unité de commande (5) désactive l'entraînement rotatif (4) de l'outil à main (2) lorsque la lumière (10) comportant une ou plusieurs propriétés définies, en particulier un faisceau laser (12), atteint le capteur de lumière (7) radialement ou obliquement par rapport à l'axe de rotation (8) de l'outil à main (2).

3. Outil à main entraîné en rotation par un moteur selon l'une ou plusieurs des revendications 1 à 2, **caractérisé en ce que** le capteur de lumière (7) se trouve devant un porte-outil de l'outil à main (2).

4. Outil à main entraîné en rotation par un moteur selon l'une ou plusieurs des revendications précédentes, **caractérisé en ce que** l'outil à main présente un outil de vissage (24) comportant une tige de vissage (25) qui est entourée d'un fourreau (26).

5. Outil à main entraîné en rotation par un moteur selon la revendication 4, **caractérisé en ce que** le capteur de lumière (27) est disposé sur l'outil de vissage (24), en particulier sur le fourreau (26).

6. Outil à main entraîné en rotation par un moteur selon l'une ou plusieurs des revendications précédentes, **caractérisé en ce que** le capteur de lumière (7) est réglable dans le sens de l'axe de rotation (8) de l'outil à main (2).

7. Outil à main entraîné en rotation par un moteur selon l'une ou plusieurs des revendications précédentes, **caractérisé en ce que** l'outil à main (2) présente plusieurs capteurs de lumière (7) disposés autour de l'axe de rotation (8) et/ou un capteur de lumière (7) tournant autour de l'axe de rotation (8).

8. Outil à main entraîné en rotation par un moteur selon l'une ou plusieurs des revendications précédentes, **caractérisé en ce que** l'outil à main (2) est une visseuse sans fil (1) ou une perceuse à main (21).

9. Procédé permettant d'arrêter l'entraînement rotatif d'un outil à main (2) entraîné en rotation par un moteur selon l'une ou plusieurs des revendications 1 à 8, dans lequel un laser de nivellement (11) est disposé par rapport à une pièce à usiner (16) de sorte qu'un faisceau laser (12) du laser de nivellement (10) se déplace dans un plan de nivellement (13) et que l'unité de commande (5) de l'outil à main (2) désactive l'entraînement rotatif (4) lorsque le faisceau laser (12) du laser de nivellement (11) atteint le capteur de lumière (7) de l'outil à main (2), **caractérisé en ce que** le capteur de lumière (7) de l'outil à main (2) dépasse le plan de nivellement (13) dans lequel le faisceau laser (12) du laser de nivellement (11) se déplace, sans que l'unité de commande (5) de l'outil à main (2) ne désactive l'entraînement rotatif de l'outil à main (2), **en ce que**, après que le capteur de lumière (7) de l'outil à main (2) a dépassé le plan de nivellement (13), le sens de rotation de l'entraînement rotatif de l'outil à main (2) est inversé et l'outil à main (2) est déplacé axialement par rapport à son axe de rotation (8) en s'éloignant de la pièce à usiner (16), **et en ce que** l'unité de commande (5) de l'outil à main (2) désactive ainsi l'entraînement rotatif (4) lorsque le faisceau laser (12) du laser de nivellement (11) atteint le capteur de lumière (7) de l'outil à main (2).

10. Procédé selon la revendication 10, **caractérisé en ce qu'**un laser de nivellement (11) est disposé par rapport à une pièce à usiner (16) de sorte que le faisceau laser (12) du laser de nivellement (11) se déplace dans le plan de nivellement (13) et que l'outil à main (2) est déplacé axialement par rapport à son axe de rotation (8) par rapport à la surface de la pièce à usiner (16) lorsque l'entraînement rotatif (4) est activé, jusqu'à ce que le faisceau laser (12) du laser de nivellement (11) atteigne le capteur de lumière (7) de l'outil à main (2) et que l'unité de commande (5) de l'outil à main (2) désactive l'entraînement rotatif (4).
